(19) Europäisches Patentamt
European Patent Office
Office européen des brevets

(11) EP 3 434 732 B1

(12) EUROPEAN PATENT SPECIFICATION

(45) Date of publication and mention of the grant of the patent:
**02.02.2022 Bulletin 2022/05**

(21) Application number: **17888632.1**

(22) Date of filing: **15.12.2017**

(51) International Patent Classification (IPC):
***C08L 55/02** (2006.01)* ***C08F 279/04** (2006.01)*
***C08F 2/24** (2006.01)* ***C08F 4/40** (2006.01)*
***C08F 2/38** (2006.01)* ***C08F 2/44** (2006.01)*
***C08L 25/12** (2006.01)*

(52) Cooperative Patent Classification (CPC):
(C-Sets available)
**C08F 279/04; C08F 2/24; C08F 2/38; C08F 2/44; C08F 4/40; C08L 25/12; C08L 55/02** (Cont.)

(86) International application number:
**PCT/KR2017/014779**

(87) International publication number:
**WO 2018/124562 (05.07.2018 Gazette 2018/27)**

(54) **ABS-BASED GRAFT COPOLYMER, PREPARATION METHOD THEREFOR, AND THERMOPLASTIC RESIN COMPOSITION CONTAINING SAME**

ABS-BASIERTES PFROPFPOLYMER, HERSTELLUNGSVERFAHREN DAFÜR UND THERMOPLASTISCHE HARZZUSAMMENSETZUNG DAMIT

COPOLYMÈRE GREFFÉ À BASE D'ABS, SON PROCÉDÉ DE PRÉPARATION, ET COMPOSITION DE RÉSINE THERMOPLASTIQUE LE CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.01.2017 KR 20170000096**
**14.12.2017 KR 20170171765**

(43) Date of publication of application:
**30.01.2019 Bulletin 2019/05**

(73) Proprietor: **LG Chem, Ltd.**
**Seoul 07336 (KR)**

(72) Inventors:
- **JUNG, Yu Sung**
  **Daejeon 34122 (KR)**
- **CHAI, Joo Byung**
  **Daejeon 34122 (KR)**
- **KIM, Jong Beom**
  **Daejeon 34122 (KR)**
- **KIM, Chang Sull**
  **Daejeon 34122 (KR)**
- **PARK, Eun Seon**
  **Daejeon 34122 (KR)**
- **JEON, Tae Young**
  **Daejeon 34122 (KR)**
- **KIM, Young Min**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

(56) References cited:
**JP-A- H11 309 361** **KR-A- 20000 018 421**
**KR-A- 20020 039 853** **KR-A- 20070 060 681**
**KR-A- 20130 057 139** **KR-A- 20140 019 101**
**KR-B1- 101 534 378**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 25/12, C08L 55/02;**
**C08L 55/02, C08L 25/12**

## Description

[Technical Field]

The present invention relates to a method of preparing an ABS graft copolymer, and a thermoplastic resin composition including the ABS graft copolymer. According to the present invention, when emulsion polymerization is performed to prepare an ABS graft copolymer, a phosphate ester-based reactive emulsifier is added at specific time point. As a result, a final molded part having greatly improved thermal stability, impact resistance such as impact strength, and appearance characteristics such as whiteness may be manufactured.

[Background Art]

In addition to good rigidity, chemical resistance, and impact resistance, acrylonitrile-butadiene-styrene (ABS) copolymers have relatively good physical properties, such as moldability and gloss. Therefore, ABS copolymers are widely used as housings or interior/exterior materials for various products, such as electrical/electronic parts, office equipment, and automobile parts.

In general, when an ABS copolymer having improved impact resistance is prepared, a diene rubber latex such as a butadiene rubber is graft-copolymerized with styrene and acrylonitrile using emulsion polymerization, and then the prepared copolymer is kneaded with a SAN resin, such as styrene-acrylonitrile copolymers, and a thermoplastic resin, such as polystyrene and polymethyl methacrylate, to prepare a resin composition.

However, when emulsion polymerization is performed, reactants, such as polymerization water, monomers, an emulsifier, an initiator, and a molecular weight modifier, are usually included. Since an excess of these reactants remains in a prepared latex after emulsion polymerization, thermal stability is lowered during thermoforming, resulting in discoloration of a final product and degradation of physical properties of the final product.

[Prior Art Document]

[Patent Document](Patent Document 1) KR 10-1515675 B1

KR 20070060681A discloses a thermoplastic g-ABS resin copolymer. JP H11309361 discloses that phosphate-based emulsifiers can be used to prepare ABS copolymers.

[Disclosure]

[Technical Problem]

Therefore, the present invention has been made in view of the above problems, and it is one object of the present invention to provide a method of preparing an ABS graft copolymer, in which the amount of undesired residues remaining in the ABS graft copolymer latex is greatly reduced, and a heat stabilizer need not be additionally added.

It is another object of the present invention to provide a thermoplastic resin composition including the ABS graft copolymer prepared according to the method, wherein the thermoplastic resin composition has improved impact resistance, e.g., increased impact strength, and improved appearance quality, e.g., excellent whiteness, while having excellent thermal stability, e.g., improved retention-associated heat discoloration properties.

The above and other objects can be accomplished by the present disclosure described below.

[Technical Solution]

In accordance with an aspect of the present invention, provided is a method of preparing ABS graft copolymer, including A) a first polymerization step of feeding 50 to 70 parts by weight of a conjugated diene rubber latex, 5 to 15 parts by weight of an aromatic vinyl compound, 1 to 10 parts by weight of a vinyl cyanide compound, 0.05 to 1 part by weight of an emulsifier, 0.01 to 0.5 parts by weight of an initiator, and 0.001 to 0.5 parts by weight of an oxidation-reduction catalyst into a reactor batchwise, based on 100 parts by weight of the total composition containing the conjugated diene rubber latex, the aromatic vinyl compound, and the vinyl cyanide compound, and performing graft polymerization; B) a second polymerization step of performing graft polymerization while continuously feeding an emulsion containing 15 to 30 parts by weight of the aromatic vinyl compound, 5 to 15 parts by weight of the vinyl cyanide compound, 0.05 to 0.5 parts by weight of a molecular weight modifier, and 0.05 to 0.5 parts by weight of the initiator based on 100 parts by weight of the total composition when a polymerization conversion rate reaches 5 to 40 %; and C) a third polymerization step of performing graft polymerization while continuously feeding 0.05 to 1 part by weight of a phosphate ester-based reactive emulsifier based on 100 parts by weight of the total composition when a polymerization conversion rate reaches

75 to 95 %, and D) a fourth polymerization step, in which, after initiation or completion of the third polymerization step, 0.01 to 0.2 parts by weight, of the initiator and 0.001 to 0.3 parts by weight of the oxidation-reduction catalyst are additionally fed into the reactor, and graft polymerization is performed,

wherein the phosphate ester-based reactive emulsifier is a compound represented by Formula 1 below:

[Formula 1]

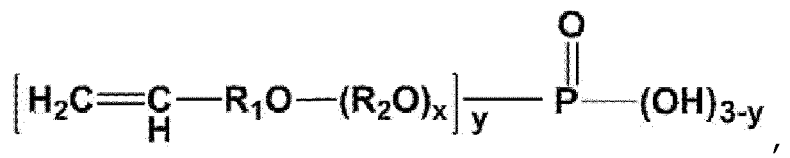

wherein $R_1$ is an alkylene having 1 to 10 carbon atoms, $R_2$ is a linear or branched alkylene having 3 to 10 carbon atoms, x is an integer of 1 to 4, and y is an integer of 1 to 3.

In accordance with yet another aspect of the present invention, provided is a thermoplastic resin composition including 10 to 50 % by weight of the ABS graft copolymer prepared according to the method and 50 to 90 % by weight of an aromatic vinyl compound-vinyl cyanide compound copolymer.
Further embodiments are disclosed in the dependent claims.

[Advantageous effects]

As apparent from the foregoing, the present invention advantageously provides a method of preparing an ABS graft copolymer. According to the present invention, when an ABS graft copolymer is prepared using emulsion polymerization, a phosphate ester-based reactive emulsifier capable of acting as a metal deactivator is added at a specific time point. As a result, the amount of undesired residues in the ABS graft copolymer latex can be greatly reduced, and a polymerization conversion rate and a grafting degree can be increased. Thus, a high-quality ABS graft copolymer having a low amount of solidified substances in the latex can be prepared in a high yield.
In addition, when the ABS graft copolymer prepared according to the present invention is used, the thermal stability of a final product can be greatly improved, e.g., the degree of retention-associated heat discoloration of the final product can be greatly lowered, without additionally adding a heat stabilizer.
In addition, when the ABS graft copolymer prepared according to the present invention is used, a thermoplastic resin composition having improved impact resistance, e.g., increased impact strength, and having improved appearance quality, e.g., excellent whiteness, while having excellent thermal stability, can be obtained.

[Best mode]

The present inventors confirmed that, when a phosphate ester-based reactive emulsifier including a phosphate functional group capable of acting as a metal ion deactivator is added at a specific time point during emulsion polymerization to prepare an ABS graft copolymer, the amount of undesired residues remaining in the latex is greatly reduced. In addition, the present inventors confirmed that, when the prepared ABS graft copolymer is included in a thermoplastic resin composition, thermal stability, impact resistance, and appearance characteristics of a final molded part are significantly improved. Based on these findings, the present inventors continued to further study and completed the present invention.
The ABS graft copolymer is obtained by graft-copolymerizing 0.05 to 1 part by weight of a phosphate ester-based reactive emulsifier represented by Formula 1 below onto 100 parts by weight of a monomer mixture containing 50 to 70 % by weight or 55 to 65 % by weight of a conjugated diene rubber latex (based on solids); 15 to 35 % by weight or 20 to 30 % by weight of an aromatic vinyl compound; and 5 to 15 % by weight or 8 to 15 % by weight of a vinyl cyanide compound:

[Formula 1]

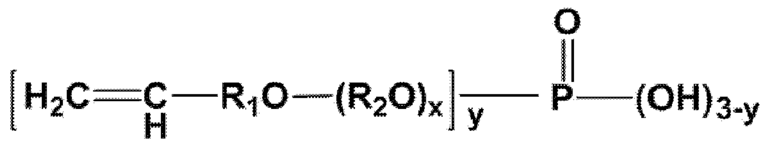

,

wherein $R_1$ is an alkylene having 1 to 10 carbon atoms, R2 is a linear or branched alkylene having 3 to 10 carbon atoms, x is an integer of 1 to 4, and y is an integer of 1 to 3.

According to the present invention, when an ABS graft copolymer is prepared, a phosphate ester-based reactive emulsifier having a phosphate functional group capable of acting as a metal deactivator is added at a specific time point. Thus, when the ABS graft copolymer is used, a heat stabilizer need not be separately added during thermoforming, such as extrusion or injection molding. Accordingly, a heat stabilizer-free resin composition may be prepared. In addition, discoloration resistance of a final molded part may be greatly improved at high temperatures.

As another example, the ABS graft copolymer may be obtained by graft-copolymerizing 0.1 to 0.8 parts by weight, 0.1 to 0.5 parts by weight, 0.3 to 0.6 parts by weight, or 0.1 to 0.3 parts by weight of the phosphate ester-based reactive emulsifier represented by Formula 1 onto 100 parts by weight of the monomer mixture. Within this range, polymerization conversion rate and grafting degree of the ABS copolymer may be increased, and a final resin composition may have excellent physical properties, such as whiteness, thermal stability, and impact resistance.

In addition, in Formula 1 representing the phosphate ester-based reactive emulsifier, preferably, $R_1$ is an alkylene having 1 to 3 carbon atoms, $R_2$ is a linear or branched alkylene having 3 to 10 carbon atoms, x is an integer of 1 to 4, and y is an integer of 1 to 3. In this case, thermal stability of the ABS graft copolymer is improved. Thus, a final resin composition may have excellent appearance characteristics, such as whiteness, and excellent impact resistance. In addition, discoloration resistance of the resin may be improved at high temperatures.

For example, the method of preparing an ABS graft copolymer according to the present invention may include A) a first polymerization step of feeding a conjugated diene rubber latex, an aromatic vinyl compound, a vinyl cyanide compound, an emulsifier, an initiator, and an oxidation-reduction catalyst into a reactor batchwise, and performing graft polymerization; B) a second polymerization step of performing graft polymerization while continuously feeding an emulsion containing the aromatic vinyl compound, the vinyl cyanide compound, a molecular weight modifier, and the initiator when a polymerization conversion rate reaches 5 to 40 %; and C) a third polymerization step of performing graft polymerization while continuously feeding the phosphate ester-based reactive emulsifier represented by Formula 1 when a polymerization conversion rate reaches 75 to 95 %. In this case, the amount of undesired residues remaining in the latex may be greatly reduced. In addition, when the ABS graft copolymer is used to prepare a thermoplastic resin composition, thermal stability, impact resistance, and appearance characteristics of a final molded part may be greatly improved.

In the present invention, for example, after drying, the weight of a latex is measured to obtain total solids content, and a polymerization conversion rate is calculated using Equation 1 below:

[Equation 1]

Polymerization conversion rate (%) = [total solids content (TSC) × (total amount of monomers and additives fed)] / [100 - (total amount of additives fed excluding monomers)]

In the present invention, continuous feed is contrary to batch feed. According to continuous feed, materials to be supplied to a reaction may be continuously fed for a predetermined period of time, e.g., for 30 or more minutes, 60 or more minutes, or 90 or more minutes after start of the reaction to 3 or less hours or 2 or less hours before the end of the reaction, without a rest period, or may be fed dropwise.

Hereinafter, the method of preparing an ABS graft copolymer according to the present invention will be described

in detail stepwise.

**A) First polymerization step**

According to the present invention, in the first polymerization step, a conjugated diene rubber latex, an aromatic vinyl compound, a vinyl cyanide compound, an emulsifier, an initiator, and an oxidation-reduction catalyst are fed into a reactor batchwise, and graft polymerization is performed.

For example, the conjugated diene rubber latex of the first polymerization step is obtained by performing emulsion polymerization of a conjugated diene compound having a structure in which double bonds and single bonds are alternately arranged, and includes a conjugated diene rubber polymer.

For example, the conjugated diene rubber polymer may include one or more selected from a butadiene polymer, a butadiene-styrene copolymer, a butadiene-acrylonitrile copolymer, an ethylene-propylene copolymer, or polymers derived therefrom, preferably a butadiene polymer or a butadiene-styrene copolymer.

In the present invention, the term "derived polymer" refers to a polymer obtained by copolymerizing other monomeric compounds or polymers, which are not included in the original polymer, or a polymer obtained by polymerizing the derivatives of conjugated compounds.

In the present invention, the derivative refers to a compound in which hydrogen atoms or atomic groups of the original compound are substituted with other atoms or atomic groups, e.g., a halogen group or an alkyl group.

For example, the rubber polymer included in the conjugated diene rubber latex may have an average particle diameter of 2,500 to 4,500 Å, preferably 2,800 to 4,000 Å, most preferably 3,000 to 3,600 Å. Within this range, a grafting degree may be excellent, and a final product may have excellent impact strength.

In the present invention, the average particle diameter of the rubber polymer may be measured, e.g., using dynamic light scattering using a Nicomp 380.

For example, the conjugated diene rubber latex may have a gel content of 60 to 99 % by weight, preferably 70 to 95 % by weight, most preferably 75 to 95 % by weight. Within this range, a final product may have excellent mechanical properties, such as impact strength.

In the present invention, for example, coagulated latex is washed and dried, and the obtained rubber agglomerate is separated into a sol and a gel, and weights are measured, and the gel content can be calculated according to Equation 2 below:

[Equation 2]

$$\text{Gel content (\% by weight)} = [\text{Weight of insoluble substance (gel)} / \text{Total weight of sample}] \times 100$$

In the first polymerization step, the conjugated diene rubber latex is fed in an amount of 50 to 70 parts by weight or 55 to 65 parts by weight. Within this range, a grafting degree may be excellent, and an ABS graft copolymer may have excellent mechanical strength, such as impact strength (the weight of the latex is based on solids).

For example, the aromatic vinyl compound grafted onto the conjugated diene rubber polymer may be one or more selected from the group consisting of styrene, alphamethylstyrene, alpha-ethylstyrene, ortho-ethylstyrene, para-ethylstyrene, 2,4-dimethylstyrene, and derivatives thereof, preferably styrene.

For example, the vinyl cyanide compound grafted onto the conjugated diene rubber polymer may be one or more selected from acrylonitrile, methacrylonitrile, and ethacrylonitrile, preferably acrylonitrile.

In the first polymerization step, the aromatic vinyl compound and the vinyl cyanide compound are preferably fed in an amount of 7 to 35 % by weight or 15 to 30 % by weight based on 100 % by weight of the total amount of the aromatic vinyl compound and the vinyl cyanide compound used in preparation of the ABS graft copolymer of the present invention. In this case, since polymerization efficiency is improved, a graft copolymer having a high grafting degree and a high conversion rate may be prepared. Therefore, a final resin composition may have excellent mechanical strength, such as impact strength.

In the first polymerization step, the aromatic vinyl compound is fed in an amount of 5 to 15 parts by weight or 5 to 10 parts by weight. Within this range, polymerization efficiency may be improved, and a graft copolymer having a high grafting degree and a high polymerization conversion rate may be prepared.

In addition, in the first polymerization step, the vinyl cyanide compound is fed in an amount of 1 to 10 parts by weight or 2 to 7 parts by weight. Within this range, a graft copolymer having a high grafting degree and a high conversion rate may be prepared. Therefore, impact resistance of the ABS resin composition may be improved.

Emulsifiers commonly used in graft polymerization in the art to which the present invention pertains are not particularly limited and may be used as the emulsifier of the first polymerization step. The emulsifier may be one or more non-reactive emulsifiers selected from the group consisting of an alkyl aryl sulfonate, an alkalimethyl alkyl sulfate, a sulfonated alkylester, a fatty acid salt, and a rosin acid salt, preferably a fatty acid salt.

As another example, the emulsifier of the first polymerization step may be the phosphate ester-based reactive emulsifier represented by Formula 1. In this case, since the amount of residues remaining in the latex is reduced during graft polymerization, it is not necessary to additionally add a heat stabilizer. In addition, when a resin composition is prepared, the emulsifier may improve compatibility between the resin composition and a matrix resin, thereby improving mechanical properties and discoloration resistance.

As another example, the emulsifier of the first polymerization step may be a mixture of the non-reactive emulsifier and the phosphate ester-based reactive emulsifier. In this case, stability of graft polymerization may be improved, and a graft-polymerized latex having a high grafting degree, in which the content of solidified substances is reduced, may be prepared. Therefore, an ABS graft resin composition may have excellent physical properties, such as impact strength and discoloration resistance.

In the first polymerization step, the emulsifier is fed in an amount of 0.05 to 1 part by weight, 0.1 to 1 part by weight, or 0.1 to 0.5 parts by weight. In this case, polymerization stability may be improved, and a final resin composition may have excellent appearance characteristics, such as whiteness and discoloration resistance.

Initiators commonly used in preparation of an ABS graft copolymer in the art are not particularly limited and may be used as the initiator of the present invention. Preferably, the initiator includes peroxy compounds, such as t-butyl hydroperoxide, paramethane hydroperoxide, cumene hydroperoxide, diisopropyl benzene hydroperoxide, and benzoyl peroxide, persulfate compounds, such as potassium persulfate, sodium persulfate, and ammonium persulfate, or mixtures thereof.

In the first polymerization step, the initiator is fed in an amount of 0.01 to 0.5 parts by weight or 0.01 to 0.1 parts by weight. Within this range, polymerization efficiency may be improved, and a graft copolymer having a high grafting degree and a high polymerization conversion rate may be prepared.

For example, the oxidation-reduction catalyst may include one or more selected from the group consisting of ferrous sulfide, dextrose, sodium pyrophosphate, sodium sulfite, sodium formaldehyde sulfoxylate, and sodium ethylenediamine tetraacetate, preferably ferrous sulfide, dextrose, and sodium pyrophosphate.

In the first polymerization step, the oxidation-reduction catalyst is fed in an amount of 0.001 to 0.5 parts by weight or 0.01 to 0.3 parts by weight. Within this range, the activity of the initiator may be increased, and polymerization efficiency may be improved.

Based on 100 parts by weight of the total amount of the conjugated diene rubber latex, the aromatic vinyl compound, and the vinyl cyanide compound used in the first polymerization step, 50 to 70 parts by weight of the conjugated diene rubber latex, 5 to 15 parts by weight of the aromatic vinyl compound, 1 to 10 parts by weight of the vinyl cyanide compound, 0.05 to 1 part by weight of the emulsifier, 0.01 to 0.5 parts by weight of the initiator, and 0.001 to 0.5 parts by weight of the oxidation-reduction catalyst may be fed into a reactor batchwise, and graft polymerization may be performed.

In addition, in the first polymerization step, the conjugated diene rubber latex, the aromatic vinyl compound, the vinyl cyanide compound, and the emulsifier may be fed first, and then the initiator and the oxidation-reduction catalyst may be fed batchwise, and graft polymerization may be performed. In this case, since polymerization efficiency is improved, a graft-polymerized latex having a high grafting degree and a high conversion rate may be prepared.

In addition, the first polymerization step may be performed, for example, for 10 to 30 minutes while maintaining the temperature of the reactor at 30 to 60 °C or 40 to 60 °C.

**B) Second polymerization step**

In the second polymerization step of the present invention, the remainder of the aromatic vinyl compound and the vinyl cyanide compound is fed when a polymerization conversion rate reaches 5 to 40 %, 10 to 30 % or 10 to 20 %, and graft polymerization is performed. By feeding the remainder of the monomers at this point, a graft copolymer having a high polymerization conversion rate and a high grafting degree may be obtained. Ultimately, physical properties, such as impact resistance, of a resin composition may be improved.

The aromatic vinyl compound and the vinyl cyanide compound may be the same as those used in the first polymerization step.

In the second polymerization step, the aromatic vinyl compound is fed in an amount of 15 to 30 parts by weight or 20 to 30 parts by weight, and the vinyl cyanide compound is fed in an amount of 5 to 15 parts by weight or 5 to 12 parts by weight. Within this range, a graft copolymer having a high grafting degree may be prepared.

In addition, in the second polymerization step, a molecular weight modifier and an initiator are used.

For example, the molecular weight modifier may include alkyl mercaptan compounds, such as t-dodecylmercaptan, t-tetradecylmercaptan, n-tetradecylmercaptan, n-octylmercaptan, sec-octylmercaptan, n-nonylmercaptan, n-decylmercaptan, n-dodecylmercaptan, and n-octadecylmercaptan, preferably t-dodecylmercaptan.

The molecular weight modifier is fed in an amount of 0.05 to 0.5 parts by weight or 0.1 to 0.3 parts by weight. Within this range, a graft-polymerized latex having a high grafting degree may be prepared.

For example, the initiator of the second polymerization step may be the same as that used in the first polymerization step, and is used in an amount of 0.05 to 0.5 parts by weight or 0.1 or 0.3 parts by weight. Within this range, it may be advantageous in terms of improvement in polymerization efficiency and reduction in undesired residues.

In the second polymerization step, graft polymerization is performed while continuously feeding an emulsion containing 15 to 30 parts by weight of the aromatic vinyl compound, 5 to 15 parts by weight of the vinyl cyanide compound, 0.05 to 0.5 parts by weight of the molecular weight modifier, and 0.05 to 0.5 parts by weight of the initiator when a polymerization conversion rate reaches 5 to 40 % or 10 to 30 %.

In the second polymerization step, by continuously feeding the emulsion, a graft-polymerized latex having a high grafting degree and a high polymerization conversion rate may be obtained, and the amount of undesired residues remaining in the latex may be reduced. Accordingly, a resin composition having excellent appearance properties, such as discoloration resistance and whiteness, may be provided.

In addition, the second polymerization step may be performed at a reaction temperature which is 5 to 15 °C higher than the reaction temperature of the first polymerization step. In this case, polymerization efficiency may be further improved.

**C) Third polymerization step**

In the third polymerization step of the present invention, the phosphate ester-based reactive emulsifier represented by Formula 1 is fed when a polymerization conversion rate reaches 75 to 95 % or 75 to 85 %, and graft polymerization is performed. When the phosphate ester-based reactive emulsifier is fed at this point, and graft polymerization is performed to prepare an ABS graft copolymer, the prepared ABS graft copolymer may serve as a compatibilizer capable of improving dispersibility and at the same time, serve as a heat stabilizer during preparation of a resin composition.

Since the phosphate ester-based reactive emulsifier has an allyl group at one end thereof, the emulsifier may be capable of being copolymerized with the vinyl cyanide compound and the aromatic vinyl compound. In addition, since the emulsifier has a phosphate functional group at the other end thereof, the emulsifier may serve as a metal deactivator and a heat stabilizer, thereby improving compatibility with a matrix resin during preparation of a resin composition. As a result, the resin composition may have excellent impact resistance, e.g., increased impact strength, excellent appearance characteristics, such as whiteness, and excellent heat resistance, e.g., reduced retention-associated heat discoloration.

For example, the phosphate ester-based reactive emulsifier may be an aqueous solution having a concentration of 10 to 30 % by weight or 15 to 25 % by weight. In this case, polymerization stability may be improved.

For example, the pH of the phosphate ester-based reactive emulsifier may be adjusted to 9.5 to 12 or 10 to 11 (when the concentration of the aqueous solution is 20 % by weight) by adding a base, and then the emulsifier may be used to prepare a graft copolymer. In this case, the stability of the polymerized latex may not be reduced, and the prepared graft copolymer may have a high grafting degree and a high polymerization conversion rate.

For example, the base may be one or more selected from potassium hydroxide, sodium hydroxide, and aqueous ammonia.

In the third polymerization step, the phosphate ester-based reactive emulsifier is fed in an amount of 0.05 to 1 part by weight, 0.1 to 0.8 parts by weight, 0.1 to 0.5 parts by weight, or 0.1 to 0.3 parts by weight. Within this range, a final resin composition may have excellent impact resistance, appearance characteristics, and heat resistance.

In addition, in the third polymerization step, the phosphate ester-based reactive emulsifier is continuously fed into a reactor. In this case, deviation in physical properties is reduced, and polymerization efficiency is improved. Thus, the amount of undesired residues remaining in the latex may be reduced during graft polymerization.

In addition, the third polymerization step may be, for example, performed at a reaction temperature of 70 to 80 °C or 72 to 76 °C. In this case, polymerization efficiency may be excellent.

**D) Fourth polymerization step**

The method of preparing an ABS graft copolymer according to the present invention includes a fourth polymerization step to further improve a polymerization conversion rate and a grafting degree. In the fourth polymerization step, an initiator and an oxidation-reduction catalyst are additionally fed after initiation or completion of the third polymerization step, and additional graft polymerization is performed while increasing temperature.

As a specific example, the initiator and the oxidation-reduction catalyst may be additionally fed when a polymerization conversion rate reaches 90 to 95 % or 92 to 94 %. In this case, polymerization conversion rate and grafting degree may be further improved. Thus, process efficiency may be improved, and a high-quality graft copolymer may be obtained.

For example, the initiator and the oxidation-reduction catalyst used in the fourth polymerization step may be the same as those used in the first polymerization step.

In the fourth polymerization step, the initiator is additionally fed in an amount of 0.01 to 0.2 parts by weight or 0.03 to 0.1 parts by weight. Within this range, polymerization conversion rate and grafting degree may be further improved.

In the fourth polymerization step, the oxidation-reduction catalyst is additionally fed in an amount of 0.001 to 0.3 parts by weight or 0.05 to 0.2 parts by weight. Within this range, the activity of the initiator may be increased, and thus polymerization conversion rate and grafting degree may be further improved.

For example, the fourth polymerization step may be performed at a reaction temperature of 76 to 90 °C or 80 to 85 °C for 30 minutes to 1 hour. As another example, graft polymerization may be performed at a reaction temperature which is 5 to 10 °C higher than that of the third polymerization step.

According to the present invention, graft polymerization may be performed at a reaction temperature of 30 to 85 °C or 40 to 80 °C for 2 to 5 hours or 2.5 to 4.5 hours. A latex obtained after completion of the graft polymerization may have, for example, a polymerization conversion rate of 95 % or more or 97 % or more and a grafting degree of 40 % or more or 45 % or more, and the content of solidified substances contained in the latex may be, for example, 0.03 % by weight or less.

In the present invention, a grafting degree can be, for example, calculated according to Equation 3 below:

[Equation 3]

Grafting degree (%) = (Weight of monomers grafted onto rubber polymer / Weight of graft copolymer) × 100

In the present invention, the content of solidified substances can be, for example, calculated according to Equation 4 below.

[Equation 4]

Content of solidified substances (% by weight) = (Weight of solidified substances formed in reactor (g) / Total weight of rubber and monomers (g)) × 100

**E) Coagulation step**

The method of preparing an ABS graft copolymer according to the present invention may include a coagulation step, in which a coagulant is added to the latex after completion of polymerization, and coagulation is performed.

Coagulants commonly used in the art to which the present invention pertains are not particularly limited and may be used as the coagulant of the coagulation step. Preferably, a coagulant having a concentration of 5 to 15 % by weight may be fed in an amount of 0.5 to 3 parts by weight or 1 to 2 parts by weight based on 100 parts by weight of the latex, and coagulation may be performed at 70 to 120 °C or 80 to 100 °C.

For example, one or more selected from acid coagulants, such as sulfuric acid, hydrochloric acid, acetic acid, and formic acid, and metal salt coagulants, such as aluminium sulfate, calcium chloride, and magnesium sulfate, may be used as the coagulant, and a metal salt coagulant is preferably used in terms of appearance improvement.

In the coagulation step, an antioxidant may be further added to the latex in an amount of 0.1 to 3 parts by weight or 0.1 to 1 part by weight based on 100 parts by weight of the latex before the coagulant is added. In this case, a final resin composition may have excellent discoloration resistance and whiteness.

The coagulated latex may be subjected to conventional processes, including washing, dehydration, and drying, to obtain an ABS graft copolymer in a powder form.

The graft copolymer may be prepared according to specific embodiments as follows. It should be noted that the embodiments are provided for the purpose of illustrating the present invention, and the scope of the present invention is not limited thereto.

As a specific example, the method of preparing an ABS graft copolymer according to the present invention may include A) a first polymerization step of feeding 50 to 70 parts by weight of a conjugated diene rubber latex, 5 to 15 parts by weight of an aromatic vinyl compound, 1 to 10 parts by weight of a vinyl cyanide compound, 0.05 to 1 part by weight of an emulsifier, 0.01 to 0.5 parts by weight of an initiator, and 0.001 to 0.5 parts by weight of an oxidation-reduction catalyst into a reactor batchwise, based on 100 parts by weight of the total composition containing the conjugated diene rubber latex, the aromatic vinyl compound, and the vinyl cyanide compound, and performing graft polymerization; B) a second polymerization step of performing graft polymerization while continuously feeding an emulsion containing 15 to 30 parts by weight of the aromatic vinyl compound, 5 to 15 parts by weight of the vinyl cyanide compound, 0.05 to 0.5 parts by weight of a molecular weight modifier, and 0.05 to 0.5 parts by weight of the initiator based on 100 parts by weight of the total composition when a polymerization conversion rate reaches 5 to 30 %; and C) a third polymerization step of performing graft polymerization while continuously feeding 0.05 to 1 part by weight of a phosphate ester-based reactive emulsifier based on 100 parts by weight of the total composition when a polymerization conversion rate reaches 75 to 95 %.

As another example, the method of preparing an ABS graft copolymer according to the present invention may include A) a first polymerization step of feeding 50 to 70 parts by weight of the conjugated diene rubber latex, 5 to 15 parts by weight of the aromatic vinyl compound, 1 to 10 parts by weight of the vinyl cyanide compound, 0.05 to 1 part by weight of the emulsifier, 0.01 to 0.5 parts by weight of the initiator, and 0.001 to 0.5 parts by weight of the oxidation-reduction catalyst into a reactor batchwise, based on 100 parts by weight of the total composition containing the conjugated diene rubber latex, the aromatic vinyl compound, and the vinyl cyanide compound, and performing graft polymerization; B) a second polymerization step of performing graft polymerization while continuously feeding an emulsion containing 15 to 30 parts by weight of the aromatic vinyl compound, 5 to 15 parts by weight of the vinyl cyanide compound, 0.05 to 0.5 parts by weight of the molecular weight modifier, and 0.05 to 0.5 parts by weight of the initiator based on 100 parts by weight of the total composition when a polymerization conversion rate reaches 5 to 30 %; and C) a third polymerization step of performing graft polymerization while continuously feeding 0.05 to 1 part by weight of the emulsifier based on 100 parts by weight of the total composition when a polymerization conversion rate reaches 75 to 85 %, wherein the emulsifier used in the first polymerization step and the third polymerization step is the phosphate ester-based reactive emulsifier represented by Formula 1. In this case, a grafting degree may be further improved, and the amount of residues remaining in the latex may be further reduced. Thus, a heat stabilizer need not be additionally added. Ultimately, a molded part having excellent mechanical properties, discoloration resistance, and whiteness may be provided.

As another example, the method of preparing an ABS graft copolymer according to the present invention may include A) a first polymerization step of feeding 55 to 65 parts by weight of the conjugated diene rubber latex (average particle diameter: 3,000 to 3,600 Å, gel content: 75 to 95 % by weight), 5 to 10 parts by weight of the aromatic vinyl compound, 2 to 7 parts by weight of the vinyl cyanide compound, 0.1 to 0.5 parts by weight of the phosphate ester-based reactive emulsifier represented by Formula 1, 0.01 to 0.1 parts by weight of the initiator, and 0.01 to 0.3 parts by weight of the oxidation-reduction catalyst into a reactor batchwise, based on 100 parts by weight of the total composition containing the conjugated diene rubber latex, the aromatic vinyl compound, and the vinyl cyanide compound, and performing graft polymerization; B) a second polymerization step of performing graft polymerization while continuously feeding an emulsion containing 20 to 30 parts by weight of the aromatic vinyl compound, 5 to 12 parts by weight of the vinyl cyanide compound, 0.1 to 0.3 parts by weight of the molecular weight modifier, and 0.1 to 0.3 parts by weight of the initiator based on 100 parts by weight of the total composition when a polymerization conversion rate reaches 10 to 30 %; and C) a third polymerization step of performing graft polymerization while continuously feeding 0.1 to 0.5 parts by weight of the phosphate ester-based reactive emulsifier represented by Formula 1 based on 100 parts by weight of the total composition when a polymerization conversion rate reaches 80 to 90 %. Within this range, a grafting degree may be further improved, and the amount of undesired residues remaining in the latex may be further reduced. Therefore, a molded part having excellent appearance characteristics, such as whiteness, and excellent mechanical properties may be provided.

The ABS graft copolymer may be mixed with a matrix resin to prepare a resin composition. Hereinafter, a resin composition including the ABS graft copolymer will be described.

The ABS graft copolymer may be mixed with an aromatic vinyl compound-vinyl cyanide compound copolymer to obtain a thermoplastic resin composition. The resin composition includes 10 to 50 % by weight of the ABS graft copolymer and 50 to 90 % by weight of the aromatic vinyl compound-vinyl cyanide compound copolymer. Within this range, a final molded part may have excellent physical properties, such as impact resistance and appearance characteristics, and processing and molding may be facilitated.

As another example, the thermoplastic resin composition may include 20 to 50 % by weight of the ABS graft copolymer and 50 to 80 % by weight of the aromatic vinyl compound-vinyl cyanide compound copolymer. Within this

range, the inherent physical properties of an ABS graft copolymer may be maintained at a high level, and processability and moldability may be improved.

For example, the aromatic vinyl compound-vinyl cyanide compound copolymer may include 10 to 40 % by weight or 20 to 35 % by weight the vinyl cyanide compound and 60 to 90 % by weight or 65 to 80 % by weight of the aromatic vinyl compound. In this case, processability and moldability of the resin composition may be improved without deteriorating physical properties, such as impact resistance, of an ABS graft resin.

The thermoplastic resin composition may be obtained by uniformly kneading the ABS graft copolymer and the aromatic vinyl compound-vinyl cyanide compound copolymer, and then extruding the kneaded product. When kneading is performed, additives, such as a lubricant, an antioxidant, and a lubricant, may be further added.

For example, the additive may be contained in an amount of 0.1 to 5 % by weight or 0.5 to 3 % by weight based on the total weight of the composition. Within this range, the effects of the additive may be realized without deteriorating physical properties of the resin composition.

Since the thermoplastic resin composition according to the present invention includes the ABS graft copolymer in which the amount of undesired residues that deteriorate thermal stability are reduced, there is no need to additionally add a heat stabilizer. Thus, the thermoplastic resin composition is a heat stabilizer-free resin composition.

In the present invention, the term "heat stabilizer-free" means that a heat stabilizer is not intentionally added when the thermoplastic resin composition is prepared.

In addition, when whiteness (thickness of specimen: 1/8") is measured according to ASTM D1925, whiteness of specimens prepared by injection-molding the resin composition may be, for example, 55 or more, 55 to 60, or 57 to 60. Thus, appearance characteristics of the resin composition are excellent.

In addition, when impact strength (thickness of specimen: 1/4") is measured according to ASTM D256, impact strength of specimens prepared by injection-molding the resin composition may be, for example, 18.5 kgcm/cm or more, 19 to 20 kgcm/cm, or 19.5 to 23 kgcm/cm. Thus, impact resistance of the resin composition is excellent.

Hereinafter, the present invention will be described in more detail with reference to the following preferred examples. However, these examples are provided for illustrative purposes only and should not be construed as limiting the scope of the present invention.

**[Example]**

**Example 1**

**1. Preparation of ABS graft copolymer**

**First polymerization step:** 60 parts by weight (based on solids) of a polybutadiene rubber latex having an average particle diameter of 3,200 Å and a gel content of 90 %, 140 parts by weight of deionized water, 0.3 parts by weight of a fatty acid salt, 7.5 parts by weight of styrene and 2.5 parts by weight of acrylonitrile as a monomer were fed into a nitrogen-substituted polymerization reactor (autoclave), and the temperature of the reactor was adjusted to 50 °C, and then 0.05 parts by weight of cumene hydroperoxide, 0.09 parts by weight of sodium pyrophosphate, 0.12 parts by weight of dextrose, and 0.002 parts by weight of ferrous sulfide were fed into the reactor batchwise.

**Second polymerization step:** Then, when a polymerization conversion rate reaches 10 %, a mixture containing 22.5 parts by weight of styrene, 7.5 parts by weight of acrylonitrile, 0.2 parts by weight of t-dodecylmercaptan, and 0.12 parts by weight of cumene hydroperoxide were continuously fed into the reactor while raising the temperature to 75 °C for 2 hours.

**Third polymerization step:** When a polymerization conversion rate reaches 75 % (30 minutes after start of continuous feed), 0.1 parts by weight (based on solids, 20 % by weight of an aqueous solution, pH 10 (adjusted with KOH)) of a phosphate ester-based reactive emulsifier (REASOAP PP-70, DENKA Co.) was continuously fed for 1 hour and 30 minutes.

**Fourth polymerization step:** After completion of continuous feeding, when a polymerization conversion rate reaches 95 %, 0.06 parts by weight of cumene hydroperoxide, 0.04 parts by weight of sodium pyrophosphate, 0.06 parts by weight of dextrose, and 0.001 parts by weight of ferrous sulfide were fed, and the temperature was raised to 80 °C for 30 minutes, and the temperature was maintained at 80 °C for 30 minutes to terminate the reaction. At this time, a polymerization conversion rate was 98 %, the content of solidified substances was 0.03 % by weight, and a grafting degree was 37 %.

**Coagulation step:** 0.5 parts by weight of an antioxidant mixture (winstay-L/IR1076=0.8/0.2 weight ratio) was added to the prepared ABS graft latex. Then, the ABS graft latex was coagulated with an aqueous solution of magnesium sulfate, washed and dried to obtain an ABS graft copolymer powder.

**2. Preparation of thermoplastic resin composition**

An ABS graft copolymer powder, a styrene-acrylonitrile copolymer (MW: 140,000 g/mol; containing 28 % by weight of acrylonitrile), and additives were added into a mixer so that the final rubber content was 15 % by weight, mixed and then pelletized using an extruder, and specimens for measuring physical properties were prepared using an injection molding machine.

**Example 2**

Except that, in the third polymerization step of Example 1, 0.3 parts by weight of a reactive emulsifier was fed when a conversion rate reached 80 %, an ABS graft copolymer was prepared in the same manner as in Example 1.

**Example 3**

Except that, in the first polymerization step of Example 2, a reactive emulsifier was fed instead of a fatty acid salt, an ABS graft copolymer was prepared in the same manner as in Example 2.

**Example 4**

Except that, in the third polymerization step of Example 2, a reactive emulsifier was fed when a conversion rate reached 95 %, an ABS graft copolymer was prepared in the same manner as in Example 2.

**Comparative Example 1**

Except that, in the third polymerization step of Example 2, 0.3 parts by weight of a fatty acid salt was fed instead of 0.3 parts by weight of a reactive emulsifier, an ABS graft copolymer was prepared in the same manner as in

Example 2.

**Comparative Example 2**

Except that, in the third polymerization step of Example 1, the amount of a reactive emulsifier was changed from 0.1 parts by weight to 1.5 parts by weight, an ABS graft copolymer was prepared in the same manner as in Example 1.

**Comparative Example 3**

Except that, in the third polymerization step of Example 2, 0.3 parts by weight of a reactive emulsifier was continuously fed when a polymerization conversion rate reached 10 %, an ABS graft copolymer was prepared in the same manner as in Example 2.

**Comparative Example 4**

Except that, in the third polymerization step of Example 2, 0.3 parts by weight of a reactive emulsifier was continuously fed when a polymerization conversion rate reached 25 %, an ABS graft copolymer was prepared in the same manner as in Example 2.

**Comparative Example 5**

Except that, in the third polymerization step of Example 2, 0.3 parts by weight of a reactive emulsifier was continuously fed when a polymerization conversion rate reached 50 %, an ABS graft copolymer was prepared in the same manner as in Example 2.

**Comparative Example 6**

Except that, in the first polymerization step of Example 1, instead of omitting feed of a fatty acid salt, 1.0 part by weight of a reactive emulsifier was fed, and except that, in third polymerization step, a reactive emulsifier was not fed, an ABS graft copolymer was prepared in the same manner as in Example 1.

[Test Example]

The properties of the ABS graft latex prepared according to Examples and Comparative Examples and the specimens were measured using the following methods, and the obtained results are shown in Table 1 below.

1. Polymerization conversion rate (%): 2 g of the latex was dried in a hot air dryer at 150 °C for 15 minutes, and the weight thereof was measured to determine total solids content (TSC), and polymerization conversion rate was calculated using Equation 1.
2. Grafting degree (%): 2 g of the ABS graft copolymer powder was added to 300 ml of acetone, and stirred for 24 hours. The mixed solution was separated using an ultracentrifuge, and the separated acetone solution was added dropwise to methanol to obtain a non-grafted portion. The non-grafted portion was dried at 60 to 120 °C, and the weight thereof was measured. The grafting degree was calculated using Equation 3.
3. Content of solidified substances (% by weight): After completion of polymerization, the weight of solidified substances formed in a reactor, the weight of total rubber, and the weight of monomers were measured. The content of solidified substances was calculated using Equation 4.
4. Whiteness: Whiteness of specimens having a thickness of 1/8" was measured using a Spectrogard Color System according to ASTM D1003.
5. Retention-associated heat discoloration: The resin compositions were retained in an injection machine at a high temperature of 250 °C for 15 minutes and then injection molding was performed. The color value was measured using a color-difference meter and discoloration degree (ΔE) was calculated using the following equation.

$$\Delta E = \sqrt{((L-L'')^2+(a-a'')^2+(b-b'')^2)}$$

L, a, b = Color values measured after injection molding without retaining the resin composition at high temperature
L", a", b"= Color values measured after injection molding after retaining the resin composition at high temperature

6. Izod impact strength (kgcm/cm): The Izod impact strength of specimens having a thickness of 1/4" was measured according to ASTM D256.

[Table 1]

| | | Examples | | | | Comparative Examples | | | | | |
|---|---|---|---|---|---|---|---|---|---|---|---|
| | | 1 | 2 | 3 | 4 | 1 | 2 | 3 | 4 | 5 | 6 |
| Rubber content | | 60 | 60 | 60 | 60 | 60 | 60 | 60 | 60 | 60 | 60 |
| Batch fed/continuously fed monomers | | 7/3 3 | 7/3 3 | 7/33 | 7/3 3 | 7/33 | 7/3 3 | 7/3 3 | 7/3 3 | 7/3 3 | 7/3 3 |
| Non-reactive emulsifier | | 0.3 | 0.3 | - | 0.3 | 0.3/0.3[b)] | 0.3 | 0.3 | 0.3 | 0.3 | - |
| Reactive emulsifi er | Feed time (conversi on rate %) | 75 | 80 | 0/80 | 95 | - | 75 | 5 | 25 | 50 | 0 |
| | Feed amount | 0.1 | 0.3 | 0.3/0.3[a)] | 0.3 | - | 1.5 | 0.3 | 0.3 | 0.3 | 1.0 [c)] |
| Polymerization conversion rate [%] | | 97. 1 | 97. 6 | 97.7 | 97. 3 | 97.2 | 92. 5 | 95. 1 | 95. 7 | 96. 5 | 85. 2 |
| Content of solidified substances [% by weight] | | 0.0 3 | 0.0 2 | 0.02 | 0.0 3 | 0.04 | 0.1 2 | 0.1 | 0.0 7 | 0.0 6 | 0.2 |
| Grafting degree [%] | | 40 | 41 | 45 | 40 | 38 | 35 | 33 | 37 | 38 | 25 |
| Whiteness | | 56 | 56 | 57 | 57 | 54 | 55 | 54 | 54 | 56 | 52 |

(continued)

| | Examples | | | | Comparative Examples | | | | | |
|---|---|---|---|---|---|---|---|---|---|---|
| Retention-associated heat discoloration (ΔE) | Δ1 . 2 | Δ1 . 2 | Δ1.0 | Δ1 . 2 | Δ2.1 | Δ1. 2 | Δ1 . 9 | Δ1 . 6 | Δ1 . 4 | Δ2. 1 |
| Impact strength [kgcm/cm] | 18. 9 | 19. 3 | 21.5 | 19. 2 | 18.3 | 17. 4 | 18. 4 | 18. 4 | 19. 3 | 15. 3 |
| In Table 1, rubber content, batch fed/continuously fed monomers, and emulsifier content are given in parts by weight based on 100 parts by weight of the total amount of the rubber latex, styrene, and acrylonitrile, and feed point of time of the non-reactive emulsifier refers to a polymerization conversion rate (%) when the emulsifier was fed. | | | | | | | | | | |

a) At the initial stage of reaction (conversion rate: 0 %) and a conversion rate of 80 %, 0.3 parts by weight of the reactive emulsifier was fed.

b) At the initial stage of reaction (conversion rate: 0 %) and a conversion rate of 75 %, 0.3 parts by weight of the non-reactive emulsifier was fed.

c) At the initial stage of reaction (conversion rate: 0 %), 1.0 part by weight of the reactive emulsifier was fed batchwise.

As shown in Table 1, compared to the copolymer of Comparative Example 1, in which the non-reactive emulsifier is used, the ABS graft copolymers of Examples 1 to 4, in which the phosphate ester-based reactive emulsifier is fed at a specific time point, have a high grafting degree while having a low content of solidified substances. In addition, compared to the compositions of Comparative Examples, the thermoplastic resin composition including the graft copolymer according to the present invention has a high whiteness value and a low retention-associated heat discoloration value, and has excellent impact strength.

In addition, when an ABS graft copolymer is prepared, as the amount of the phosphate ester-based reactive emulsifier is increased, the grafting degree is higher, and whiteness, discoloration resistance, and impact strength of specimens are further improved. In particular, in the case of Example 3, in which the reactive emulsifier is fed both in the first and third polymerization steps, all physical properties are excellent.

In addition, referring to the results of Comparative Example 2, although the reactive emulsifier is fed at the same time as in Example 1, since the reactive emulsifier was fed in an excess amount, in comparison with Example 1, the polymerization conversion rate and the grafting degree are somewhat reduced, and the content of solidified substances is greatly increased. That is, when the phosphate ester-based reactive emulsifier is used in an excess amount, polymerization efficiency and latex stability are deteriorated, and impact strength of the final resin composition is somewhat lowered.

In addition, in the case of Comparative Examples 3 and 5, in which experiments are performed as the same manner as in Example 2 except that the reactive emulsifier is fed when a conversion rate reaches 10 to 50 %, in comparison with Example 2, the content of solidified substances is increased by 5 times, and the grafting degree and the conversion rate of polymers obtained after polymerization are somewhat lowered, and the physical properties of the final specimens are also deteriorated.

In addition, referring to the results of Comparative Example 6, when all of the reactive emulsifier is fed at the initial stage of the reaction and graft polymerization is performed, the polymerization conversion rate and the grafting degree are greatly lowered, and the content of solidified substances is greatly increased, and the physical properties, such as whiteness, retention-associated heat discoloration, and impact strength, of the final specimens are significantly deteriorated.

Referring to the results of Comparative Examples 3 to 6, stability and physical properties of the latex are further lowered as feed time of the reactive emulsifier approaches the initial stage of reaction. Based on the results, it can be confirmed that in addition to the amount of the phosphate ester-based reactive emulsifier, feed time of the emulsifier is also an important factor to be controlled.

These results suggest that the phosphate ester-based reactive emulsifier contributes to emulsification and stabilization of the latex, and at the same time, acts as a metal deactivator in the oxidation-reduction system.

## Claims

1. A method of preparing an ABS graft copolymer, comprising:

A) a first polymerization step of feeding 50 to 70 parts by weight of a conjugated diene rubber latex, 5 to 15 parts by weight of an aromatic vinyl compound, 1 to 10 parts by weight of a vinyl cyanide compound, 0.05 to 1 part by weight of an emulsifier, 0.01 to 0.5 parts by weight of an initiator, and 0.001 to 0.5 parts by weight of an oxidation-reduction catalyst into a reactor batchwise, based on 100 parts by weight of a total composition containing the conjugated diene rubber latex, the aromatic vinyl compound, and the vinyl cyanide compound, and performing graft polymerization;
B) a second polymerization step of performing graft polymerization while continuously feeding an emulsion containing 15 to 30 parts by weight of the aromatic vinyl compound, 5 to 15 parts by weight of the vinyl cyanide compound, 0.05 to 0.5 parts by weight of a molecular weight modifier, and 0.05 to 0.5 parts by weight of the initiator based on 100 parts by weight of the total composition when a polymerization conversion rate reaches 5 to 40 %;
C) a third polymerization step of performing graft polymerization while continuously feeding 0.05 to 1 part by weight of a phosphate ester-based reactive emulsifier based on 100 parts by weight of the total composition when a polymerization conversion rate reaches 75 to 95 %, and
D) a fourth polymerization step, in which, after initiation or completion of the third polymerization step, 0.01 to 0.2 parts by weight of the initiator and 0.001 to 0.3 parts by weight of the oxidation-reduction catalyst are additionally fed into the reactor, and graft polymerization is performed,

wherein the phosphate ester-based reactive emulsifier is a compound represented by Formula 1 below:

[Formula 1]

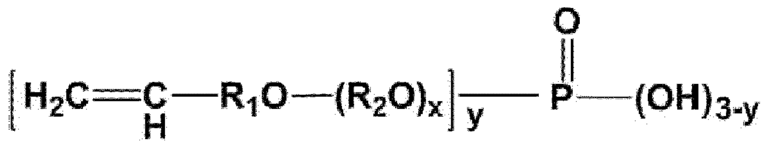

,

wherein $R_1$ is an alkylene having 1 to 10 carbon atoms, $R_2$ is a linear or branched alkylene having 3 to 10 carbon atoms, x is an integer of 1 to 4, and y is an integer of 1 to 3.

**2.** The method according to claim 1, wherein the phosphate ester-based reactive emulsifier is an aqueous solution containing the compound represented by Formula 1 in a concentration of 10 to 30 wt%.

**3.** The method according to claim 2, wherein a pH of the aqueous solution of the phosphate ester-based reactive emulsifier is adjusted to 9.5 to 12 (when a concentration of the aqueous solution is 20 wt%) by adding a base.

**4.** The method according to claim 3, wherein the base is one or more selected from potassium hydroxide, sodium hydroxide, and aqueous ammonia.

**5.** The method according to claim 1, wherein the emulsifier of the first polymerization step is one or more selected from a non-reactive emulsifier and the phosphate ester-based reactive emulsifier.

**6.** The method according to claim 1, wherein the conjugated diene rubber latex has an average particle diameter of 2,500 to 4,500 Å.

**7.** The method according to claim 1, wherein the conjugated diene rubber latex has a gel content of 65 to 95 % by weight.

**8.** The method according to claim 1, wherein the graft polymerization is performed at a reaction temperature of 30 to 85 °C for 2.5 to 4.5 hours.

**9.** The method according to claim 1, wherein the latex obtained after completion of the graft polymerization has a polymerization conversion rate of 95 % or more and a grafting degree of 40 % or more.

**10.** The method according to claim 1, wherein the latex obtained after completion of the graft polymerization contains solidified substances in an amount of 0.03 % by weight or less.

**11.** A thermoplastic resin composition, comprising 10 to 50 % by weight of the ABS graft copolymer prepared according

to any one of claims 1 to 10 and 50 to 90 % by weight of an aromatic vinyl compound-vinyl cyanide compound copolymer.

**12.** The thermoplastic resin composition according to claim 11, wherein, when whiteness is measured according to ASTM D1925, the thermoplastic resin composition has a whiteness of 55 or more.

**13.** The thermoplastic resin composition according to claim 11, wherein the composition is a heat stabilizer-free resin composition.

## Patentansprüche

**1.** Verfahren zum Herstellen eines ABS-Pfropfcopolymers, umfassend:

A) einen ersten Polymerisationsschritt des Zuführens von 50 bis 70 Gewichtsteilen eines konjugierten Dien-Kautschuklatex, 5 bis 15 Gewichtsteilen einer aromatischen Vinylverbindung, 1 bis 10 Gewichtsteilen einer Vinylcyanidverbindung, 0,05 bis 1 Gewichtsteilen eines Emulgators, 0,01 bis 0,5 Gewichtsteilen eines Initiators und 0,001 bis 0,5 Gewichtsteilen eines Oxidation-Reduktion-Katalysators chargenweise in einen Reaktor, basierend auf 100 Gewichtsteilen einer Gesamtzusammensetzung, die den konjugierten Dien-Kautschuklatex, die aromatische Vinylverbindung und die Vinylcyanidverbindung enthält, und Durchführen einer Pfropfpolymerisation;
B) einen zweiten Polymerisationsschritt des Durchführens einer Pfropfpolymerisation, während kontinuierlich eine Emulsion zugeführt wird, die 15 bis 30 Gewichtsteile der aromatischen Vinylverbindung, 5 bis 15 Gewichtsteile der Vinylcyanidverbindung, 0,05 bis 0,5 Gewichtsteile eines Molekulargewichtsmodifizierers und 0,05 bis 0,5 Gewichtsteile des Initiators enthält, basierend auf 100 Gewichtsteilen der Gesamtzusammensetzung, wenn eine Polymerisationsumsetzungsrate 5 bis 40% erreicht;
C) einen dritten Polymerisationsschritt des Durchführens einer Pfropfpolymerisation, während kontinuierlich 0,05 bis 1 Gewichtsteile eines reaktiven Emulgators auf Basis von Phosphatester, basierend auf 100 Gewichtsteilen der Gesamtzusammensetzung, zugeführt werden, wenn eine Polymerisationsumsetzungsrate 75 bis 95% erreicht, und
D) einen vierten Polymerisationsschritt, bei dem, nach Initiierung oder Vervollständigung des dritten Polymerisationsschritts, 0,01 bis 0,2 Gewichtsteile des Initiators und 0,001 bis 0,3 Gewichtsteile des Oxidation-Reduktion-Katalysators zusätzlich in den Reaktor eingeführt werden, und eine Pfropfpolymerisation durchgeführt wird,

wobei der reaktive Emulgator auf Basis von Phosphatester eine durch Formel 1 unten dargestellte Verbindung ist:

[Formel 1]

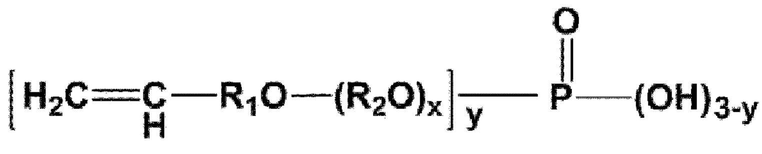

,

wobei $R_1$ ein Alkylen mit 1 bis 10 Kohlenstoffatomen ist, $R_2$ ein lineares oder verzweigtes Alkylen mit 3 bis 10 Kohlenstoffatomen ist, x eine ganze Zahl von 1 bis 4 ist und y eine ganze Zahl von 1 bis 3 ist.

**2.** Verfahren nach Anspruch 1, wobei der reaktive Emulgator auf Basis von Phosphatester eine wässrige Lösung ist, die die durch Formel 1 dargestellte Verbindung in einer Konzentration von 10 bis 30 Gew.-% enthält.

**3.** Verfahren nach Anspruch 2, wobei ein pH der wässrigen Lösung des reaktiven Emulgators auf Basis von Phosphatester auf 9,5 bis 12 eingestellt wird (wenn eine Konzentration der wässrigen Lösung 20 Gew.-% ist) durch Zufügen einer Base.

4. Verfahren nach Anspruch 3, wobei die Base eine oder mehrere ist, ausgewählt aus Kaliumhydroxid, Natriumhydroxid und wässrigem Ammoniak.

5. Verfahren nach Anspruch 1, wobei der Emulgator des ersten Polymerisationsschritts einer oder mehrere ist, ausgewählt aus einem nichtreaktiven Emulgator und dem reaktiven Emulgator auf Basis von Phosphatester.

6. Verfahren nach Anspruch 1, wobei der konjugierte Dien-Kautschuklatex einen durchschnittlichen Teilchendurchmesser von 2.500 bis 4.500 Å aufweist.

7. Verfahren nach Anspruch 1, wobei der konjugierte Dien-Kautschuklatex einen Gelgehalt von 65 bis 95 Gew.-% aufweist.

8. Verfahren nach Anspruch 1, wobei die Pfropfpolymerisation bei einer Reaktionstemperatur von 30 bis 85°C für 2,5 bis 4,5 Stunden durchgeführt wird.

9. Verfahren nach Anspruch 1, wobei der Latex, der nach Vervollständigung der Pfropfpolymerisation erhalten wird, eine Polymerisationsumsetzungsrate von 95% oder mehr und einen Pfropfgrad von 40% oder mehr aufweist.

10. Verfahren nach Anspruch 1, wobei der Latex, der nach Vervollständigung der Pfropfpolymerisation erhalten wird, verfestigte Substanzen in einer Menge von 0,03 Gew.-% oder weniger enthält.

11. Thermoplastische Harzzusammensetzung, umfassend 10 bis 50 Gew.-% des ABS-Pfropfcopolymers, das gemäß einem der Ansprüche 1 bis 10 hergestellt wird, und 50 bis 90 Gew.-% eines aromatische Vinylverbindung-Vinylcyanidverbindung-Copolymers.

12. Thermoplastische Harzzusammensetzung nach Anspruch 11, wobei, wenn Weißheit gemäß ASTM D1925 gemessen wird, die thermoplastische Harzzusammensetzung eine Weißheit von 55 oder höher aufweist.

13. Thermoplastische Harzzusammensetzung nach Anspruch 11, wobei die Zusammensetzung eine Wärmestabilisator-freie Harzzusammensetzung ist.

**Revendications**

1. Procédé de préparation d'un copolymère greffé d'ABS, comprenant :

A) une première étape de polymérisation consistant à introduire 50 à 70 parties en poids d'un latex de caoutchouc de diène conjugué, 5 à 15 parties en poids d'un composé de vinyle aromatique, 1 à 10 parties en poids d'un composé de cyanure de vinyle, 0,05 à 1 partie en poids d'un émulsifiant, 0,01 à 0,5 partie en poids d'un initiateur et 0,001 à 0,5 partie en poids d'un catalyseur d'oxydoréduction dans un réacteur par lots, sur la base de 100 parties en poids d'une composition totale contenant le latex de caoutchouc de diène conjugué, le composé de vinyle aromatique et le composé de cyanure de vinyle, et à effectuer une polymérisation avec greffage ;
B) une deuxième étape de polymérisation consistant à effectuer une polymérisation avec greffage tout en introduisant en continu une émulsion contenant 15 à 30 parties en poids du composé de vinyle aromatique, 5 à 15 parties en poids du composé de cyanure de vinyle, 0,05 à 0,5 partie en poids d'un agent modifiant de poids moléculaire et 0,05 à 0,5 partie en poids de l'initiateur sur la base de 100 parties en poids de la composition totale quand un taux de conversion de polymérisation atteint 5 à 40 % ;
C) une troisième étape de polymérisation consistant à effectuer une polymérisation avec greffage tout en introduisant en continu 0,05 à 1 partie en poids d'un émulsifiant réactif à base d'ester de phosphate sur la base de 100 parties en poids de la composition totale quand un taux de conversion de polymérisation atteint 75 à 95 %, et
D) une quatrième étape de polymérisation, dans laquelle, après le début ou la fin de la troisième étape de polymérisation, 0,01 à 0,2 partie en poids de l'initiateur et 0,001 à 0,3 partie en poids du catalyseur d'oxydoréduction sont en plus introduites dans le réacteur et une polymérisation avec greffage est effectuée,

dans lequel l'émulsifiant réactif à base d'ester de phosphate est un composé représenté par la Formule 1 ci-dessous :

[Formule 1]

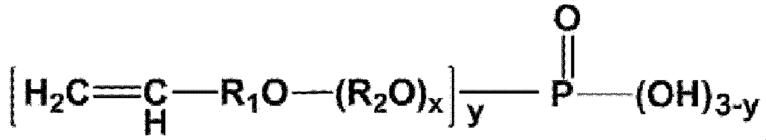

,

dans lequel $R_1$ est un alkylène ayant 1 à 10 atomes de carbone, $R_2$ est un alkylène linéaire ou ramifié ayant 3 à 10 atomes de carbone, x est un nombre entier de 1 à 4, et y est un nombre entier de 1 à 3.

**2.** Procédé selon la revendication 1, dans lequel l'émulsifiant réactif à base d'ester de phosphate est une solution aqueuse contenant le composé représenté par la Formule 1 dans une concentration de 10 à 30 % en poids.

**3.** Procédé selon la revendication 2, dans lequel un pH de la solution aqueuse de l'émulsifiant réactif à base d'ester de phosphate est ajusté de 9,5 à 12 (quand une concentration de la solution aqueuse est 20 % en poids) en ajoutant une base.

**4.** Procédé selon la revendication 3, dans lequel la base est une ou plusieurs bases sélectionnées parmi un hydroxyde de potassium, un hydroxyde de sodium et un ammoniac aqueux.

**5.** Procédé selon la revendication 1, dans lequel l'émulsifiant de la première étape de polymérisation est un ou plusieurs émulsifiants sélectionnés parmi un émulsifiant non réactif et l'émulsifiant réactif à base d'ester de phosphate.

**6.** Procédé selon la revendication 1, dans lequel le latex de caoutchouc de diène conjugué a un diamètre de particule moyen de 2500 à 4500 Å.

**7.** Procédé selon la revendication 1, dans lequel le latex de caoutchouc de diène conjugué a une teneur en gel de 65 à 95 % en poids.

**8.** Procédé selon la revendication 1, dans lequel la polymérisation avec greffage est effectuée à une température de réaction de 30 à 85°C pendant 2,5 à 4,5 heures.

**9.** Procédé selon la revendication 1, dans lequel le latex obtenu après la fin de la polymérisation avec greffage a un taux de conversion de polymérisation égal ou supérieur à 95 % et un degré de greffage égal ou supérieur à 40 %.

**10.** Procédé selon la revendication 1, dans lequel le latex obtenu après la fin de la polymérisation avec greffage contient des substances solidifiées dans une quantité égale ou inférieure à 0,03 % en poids.

**11.** Composition de résine thermoplastique, comprenant 10 à 50 % en poids du copolymère greffé d'ABS préparé selon l'une quelconque des revendications 1 à 10, et 50 à 90 % en poids d'un copolymère de composé de vinyle aromatique-composé de cyanure de vinyle.

**12.** Composition de résine thermoplastique selon la revendication 11, dans laquelle, quand la blancheur est mesurée selon ASTM D1925, la composition de résine thermoplastique a une blancheur égale ou supérieure à 55.

**13.** Composition de résine thermoplastique selon la revendication 11, dans laquelle la composition est une composition de résine exempte de stabilisateur thermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101515675 B1
- KR 20070060681 A
- JP H11309361 B